# EUROPEAN PATENT APPLICATION

(11) **EP 4 576 848 A1**
(43) Date of publication of application: **25.06.2025**
(21) Application number: 24806168.1
(22) Date of filing: 13.03.2024
(51) Int. Cl.: H04W 8/00

(54) **DEVICE SEARCHING METHOD AND ELECTRONIC DEVICE**

(30) Priority: 18.05.2023 CN 202310567265
(71) Applicant: Honor Device Co., Ltd., Shenzhen, Guangdong 518040 (CN)
(72) Inventor: TANG, Nengfu, Shenzhen, Guangdong 518040 (CN); GONG, Weilin, Shenzhen, Guangdong 518040 (CN); ZHANG, Yashu, Shenzhen, Guangdong 518040 (CN); ZHANG, Ruifang, Shenzhen, Guangdong 518040 (CN); YAN, Bin, Shenzhen, Guangdong 518040 (CN); ZHANG, Sai, Shenzhen, Guangdong 518040 (CN)
(74) Representative: Gill Jennings & Every LLP
(86) International application number: PCT/CN2024/081387
(87) International publication number: WO 2024/234808

(57) **Abstract**

A device search method and a Bluetooth device are disclosed. The method includes: A first Bluetooth host determines a first quantity of filters required by a Bluetooth application for searching for a Bluetooth device. The first Bluetooth host allocates the first quantity of filters to the Bluetooth application in idle filters of a first Bluetooth controller and a second Bluetooth controller. When the first quantity of filters allocated to the Bluetooth application include an idle filter of the second Bluetooth controller, the first Bluetooth host controls the second Bluetooth host to allocate the idle filter of the second Bluetooth controller. The first Bluetooth host searches for the Bluetooth device by using the first quantity of filters. Embodiments of this application can support a Bluetooth device in connecting to more Bluetooth devices by using a Bluetooth technology.

## Description

This application claims priority to Chinese Patent Application No. 202310567265.9, filed with the China National Intellectual Property Administration on May 18, 2023 and entitled "DEVICE SEARCH METHOD AND ELECTRONIC DEVICE", which is incorporated herein by reference in its entirety.

### TECHNICAL FIELD

This application relates to the field of data processing technologies, and in particular, to a device search method and an electronic device.

### BACKGROUND

Bluetooth is an important manner for communication between electronic devices. An electronic device supporting Bluetooth communication may also be referred to as a Bluetooth device. However, a Bluetooth device (for example, a mobile phone) can simultaneously connect to only a limited quantity of other Bluetooth devices (for example, Bluetooth peripherals) by using the Bluetooth technology, which restricts the Bluetooth device in interworking with more Bluetooth devices.

### SUMMARY

This application provides a device search method and an electronic device, to support a Bluetooth device in connecting to more Bluetooth devices by using a Bluetooth technology.

According to a first aspect, an embodiment of this application provides a device search method, applied to a first Bluetooth device. The first Bluetooth device includes: a first Bluetooth host, a second Bluetooth host, a first Bluetooth controller, and a second Bluetooth controller, the first Bluetooth host is connected to the first Bluetooth controller, and the second Bluetooth host is connected to the second Bluetooth controller. The method includes: The first Bluetooth host determines a first quantity of filters required by a Bluetooth application for searching for a Bluetooth device. The first Bluetooth host allocates the first quantity of filters to the Bluetooth application in idle filters of the first Bluetooth controller and the second Bluetooth controller. When the first quantity of filters include an idle filter of the second Bluetooth controller, the first Bluetooth host indicates the second Bluetooth host to allocate the idle filter of the second Bluetooth controller to the Bluetooth application. The first Bluetooth host searches for the Bluetooth device by using the first quantity of filters. In the method, the first Bluetooth device is provided with two Bluetooth hosts, each Bluetooth host is connected to one Bluetooth controller, and filter resources are allocated from two Bluetooth controllers to a Bluetooth application for device search, which increases filter resources available to the first Bluetooth device, and therefore can support the first Bluetooth device in connecting to more Bluetooth devices by using a Bluetooth technology.

In a possible implementation, that the first Bluetooth host allocates the first quantity of filters to the Bluetooth application in idle filters of the first Bluetooth controller and the second Bluetooth controller includes: When a quantity of idle filters of the first Bluetooth controller is a second quantity, a quantity of idle filters of the second Bluetooth controller is a third quantity, the second quantity is less than the first quantity, and the third quantity is greater than or equal to a difference between the first quantity and the second quantity, the first Bluetooth host allocates the second quantity of filters to the Bluetooth application in the idle filters of the first Bluetooth controller, and controls the second Bluetooth host to allocate the difference quantity of filters to the Bluetooth application in the idle filters of the second Bluetooth controller.

In a possible implementation, that the first Bluetooth host searches for the Bluetooth device by using the first quantity of filters includes: The first Bluetooth host controls the first Bluetooth controller to search for the Bluetooth device by using the second quantity of filters, and indicates the second Bluetooth host to search for the Bluetooth device by using the difference quantity of filters, so that the second Bluetooth host controls the second Bluetooth controller to search for the Bluetooth device by using the difference quantity of filters.

In a possible implementation, that the first Bluetooth host allocates the first quantity of filters to the Bluetooth application in idle filters of the first Bluetooth controller and the second Bluetooth controller includes: When a quantity of idle filters of the first Bluetooth controller is 0, a quantity of idle filters of the second Bluetooth controller is a third quantity, and the third quantity is greater than or equal to the first quantity, the first Bluetooth host controls the second Bluetooth host to allocate the first quantity of filters to the Bluetooth application in the idle filters of the second Bluetooth controller.

In a possible implementation, that the first Bluetooth host searches for the Bluetooth device by using the first quantity of filters includes: The first Bluetooth host indicates the second Bluetooth host to search for the Bluetooth device by using the first quantity of filters. The second Bluetooth host controls the second Bluetooth controller to search for the Bluetooth device by using the first quantity of filters.

In a possible implementation, the method further includes: When a total quantity of idle filters of the first Bluetooth controller and the second Bluetooth controller is less than the first quantity, the first Bluetooth host indicates a filter allocation failure to the Bluetooth application.

In a possible implementation, the method further includes: The first Bluetooth host sends a search result of the Bluetooth device to the Bluetooth application. The Bluetooth application displays a second interface. The second interface is configured to display the search result. When the Bluetooth application detects, in the second interface, a selection operation performed by the user on a second Bluetooth device, the first Bluetooth host establishes a Bluetooth connection to the second Bluetooth device by using the first Bluetooth controller.

In a possible implementation, the method further includes: The first Bluetooth host sends address information of the first Bluetooth controller and address information of the second Bluetooth controller to the second Bluetooth device.

In a possible implementation, that the first Bluetooth host sends address information of the first Bluetooth controller and address information of the second Bluetooth controller to the second Bluetooth device includes: The first Bluetooth host sends the address information of the first Bluetooth controller and the address information of the second Bluetooth controller to the second Bluetooth device through the Bluetooth connection. Alternatively, the first Bluetooth host sends the address information of the first Bluetooth controller to the second Bluetooth device through the Bluetooth connection, and uploads the address information of the second Bluetooth controller to a cloud server, so that the second Bluetooth device downloads the address information of the second Bluetooth controller from the cloud server.

In a possible implementation, the method further includes: The first Bluetooth host receives address information of the second Bluetooth device sent by the second Bluetooth device, and sends the address information of the second Bluetooth device to the second Bluetooth host. The second Bluetooth host adds the address information of the second Bluetooth device to the second Bluetooth controller, so that the second Bluetooth controller communicates with the second Bluetooth device based on the address information of the second Bluetooth device.

In a possible implementation, the address information includes an IRK.

According to a second aspect, an embodiment of this application provides a Bluetooth device, including: a processor, a memory, a first Bluetooth controller, and a second Bluetooth controller. One or more computer programs are stored in the memory, the one or more computer programs include instructions, and when the instructions are executed by the processor, the Bluetooth device is enabled to perform the method according to the first aspect.

According to a third aspect, an embodiment of this application provides a computer-readable storage medium. The computer-readable storage medium stores a computer program, and when the computer program is run on a computer, the computer is enabled to perform the method according to the first aspect.

### BRIEF DESCRIPTION OF DRAWINGS

To describe technical solutions in embodiments of the present invention more clearly, the following briefly describes accompanying drawings required in embodiments. It is clear that the accompanying drawings in the following descriptions show merely some embodiments of the present invention, and a person of ordinary skill in the art may still derive other drawings from these accompanying drawings without creative efforts.
FIG. 1A is a diagram of a structure of a Bluetooth device according to an embodiment of this application;
FIG. 1B is a diagram of a software structure of a Bluetooth device according to an embodiment of this application;
FIG. 2A is a diagram of a Bluetooth architecture of a Bluetooth device according to an embodiment of this application;
FIG. 2B is a diagram of a scenario according to an embodiment of this application;
FIG. 3A to FIG. 3E are diagrams of structures of a first Bluetooth device according to an embodiment of this application;
FIG. 4A is a diagram of a scenario to which a device search method is applicable according to an embodiment of this application;
FIG. 4B is a diagram of an interface of a device search method according to an embodiment of this application;
FIG. 5A is a schematic flowchart of a device search method according to an embodiment of this application;
FIG. 5B is a diagram of another structure of a first Bluetooth device according to an embodiment of this application;
FIG. 6 is a second schematic flowchart of a device search method according to an embodiment of this application;
FIG. 7 is a third schematic flowchart of a device search method according to an embodiment of this application;
FIG. 8 is a fourth schematic flowchart of a device search method according to an embodiment of this application;
FIG. 9 is a fifth schematic flowchart of a device search method according to an embodiment of this application;
FIG. 10 is a diagram of still another structure of a first Bluetooth device according to an embodiment of this application;
FIG. 11 is a sixth schematic flowchart of a device search method according to an embodiment of this application; and
FIG. 12 is a seventh schematic flowchart of a device search method according to an embodiment of this application.

### DESCRIPTION OF EMBODIMENTS

Terms used in embodiments of this application are merely intended to explain specific embodiments of this application rather than limit this application.

Bluetooth is an important manner for communication between electronic devices. However, a Bluetooth device can simultaneously connect to only a limited quantity of other Bluetooth devices by using the Bluetooth technology, which restricts the Bluetooth device in interworking with more Bluetooth devices.

For example, with the development of Bluetooth peripherals, a mobile phone can connect to more Bluetooth peripherals. However, a quantity of Bluetooth peripherals to which the mobile phone can simultaneously connect is limited.

Therefore, embodiments of this application provide a device search method and an electronic device, to support a Bluetooth device in connecting to more Bluetooth devices through Bluetooth.

The Bluetooth device in embodiments of this application is an electronic device that can support communication with outside (for example, a Bluetooth peripheral) by using the Bluetooth technology. The Bluetooth device may include: a mobile phone, a tablet computer (PAD), a watch, a headset, or the like.

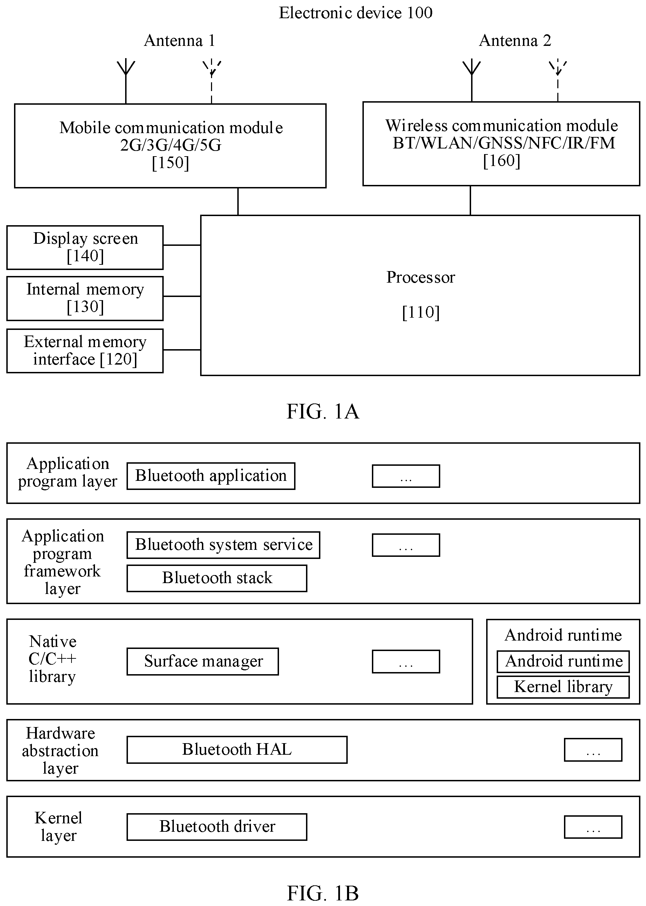

FIG. 1A is a diagram of a structure of a Bluetooth device. As shown in FIG. 1A, a Bluetooth device 100 may include a processor 110, an external memory interface 120, an internal memory 130, a display screen 140, an antenna 1, an antenna 2, a mobile communication module 150, a wireless communication module 160, and the like.

It may be understood that the structure shown in this embodiment of the present invention does not constitute a specific limitation on the Bluetooth device 100. In some other embodiments of this application, the Bluetooth device 100 may include more or fewer components than those shown in the figure, or have some components combined, or have some components split, or have a different component arrangement. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural network processing unit (neural-network processing unit, NPU). Different processing units may be independent components, or may be integrated in one or more processors.

The controller may generate an operation control signal based on instruction operation code and a timing signal, to control instruction fetching and instruction execution.

A memory may be further disposed in the processor 110, to store instructions and data. In some embodiments, the memory in the processor 110 is a cache. The memory may store instructions or data that has been just used or is cyclically used by the processor 110. If the processor 110 needs to use the instructions or the data again, the processor may directly invoke the instructions or the data from the memory. This avoids repeated access, and reduces a waiting time of the processor 110, thereby improving system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

A wireless communication function of the Bluetooth device 100 may be implemented by using the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the Bluetooth device 100 may be configured to cover one or more communication bands. Different antennas may be further multiplexed to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution including 2G/3G/4G/5G and the like to be applied to the Bluetooth device 100. The mobile communication module 150 may include at least one filter, switch, power amplifier, low noise amplifier (low noise amplifier, LNA), and the like. The mobile communication module 150 may receive an electromagnetic wave by using the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation by using the antenna 1. In some embodiments, at least some functional modules of the mobile communication module 150 may be disposed in the processor 110. In some embodiments, at least some functional modules in the mobile communication module 150 may be disposed in a same component as at least some modules in the processor 110.

The modem processor may include a modulator and a demodulator. The modulator is configured to modulate a to-be-sent low-frequency baseband signal into an intermediate/high-frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. In some embodiments, the modem processor may be an independent component. In some other embodiments, the modem processor may be independent of the processor 110, and is disposed in a same component as the mobile communication module 150 or another functional module.

The wireless communication module 160 may provide a wireless communication solution including a wireless local area network (wireless local area network, WLAN) (for example, a wireless fidelity (wireless fidelity, Wi-Fi) network), Bluetooth (bluetooth, BT), a global navigation satellite system (global navigation satellite system, GNSS), frequency modulation (frequency modulation, FM), a near field communication (near field communication, NFC) technology, an infrared (infrared, IR) technology, and the like to be applied to the Bluetooth device 100. The wireless communication module 160 may be one or more devices into which at least one communication processing module (for example, a Bluetooth processing module) is integrated. The wireless communication module 160 receives an electromagnetic wave by using the antenna 2, performs frequency modulation and filtering processing on the electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation by using the antenna 2. For example, the Bluetooth processing module, which may also be referred to as a Bluetooth controller (Controller), is a hardware part for Bluetooth processing, and mainly includes a radio frequency circuit part, configured to convert a digital signal into an electromagnetic wave to be sent by using the antenna 2, or convert an electromagnetic wave received by the antenna 2 into a digital signal to be sent to the processor. The Bluetooth processing module may be disposed in a Bluetooth chip, or integrated in a processor chip, such as an MCU.

In some embodiments, the antenna 1 of the Bluetooth device 100 is coupled to the mobile communication module 150, and the antenna 2 is coupled to the wireless communication module 160, so that the Bluetooth device 100 can communicate with a network and another device by using a wireless communication technology. The wireless communication technology may include global system for mobile communication (global system for mobile communication, GSM), general packet radio service (general packet radio service, GPRS), code division multiple access (code division multiple access, CDMA), wideband code division multiple access (wideband code division multiple access, WCDMA), time division-code division multiple access (time-division code division multiple access, TD-SCDMA), long term evolution (long term evolution, LTE), BT, GNSS, WLAN, NFC, FM, IR, and/or other technologies. The GNSS may include a global positioning system (global positioning system, GPS), a global navigation satellite system (global navigation satellite system, GLONASS), a beidou navigation satellite system (beidou navigation satellite system, BDS), a quasi-zenith satellite system (quasi-zenith satellite system, QZSS), and/or a satellite-based enhancement system (satellite-based augmentation systems, SBAS).

The digital signal processor is configured to process a digital signal. In addition to a digital image signal, the digital signal processor may further process another digital signal. For example, when the Bluetooth device 100 selects a frequency, the digital signal processor is configured to perform Fourier transform or the like on frequency energy.

The external memory interface 120 may be configured to connect to an external memory card, for example, a Micro SD card, to expand a storage capability of the Bluetooth device 100. The external memory card communicates with the processor 110 through the external memory interface 120, to implement a data storage function. For example, music, video, and other files are stored in the external memory card.

The internal memory 130 may be configured to store computer-executable program code. The executable program code includes instructions. The internal memory 130 may include a program storage area and a data storage area. The program storage area may store an operating system, an application program required by at least one function (for example, a sound playing function or an image playing function), and the like. The data storage area may store data (such as audio data and an address book) created during use of the Bluetooth device 100, and the like. In addition, the internal memory 130 may include a high-speed random access memory, and may further include a non-volatile memory, for example, at least one disk storage device, a flash memory device, or a universal flash storage (universal flash storage, UFS). The processor 110 executes various function applications and data processing of the Bluetooth device 100 by running the instructions stored in the internal memory 130 and/or the instructions stored in the memory disposed in the processor.

The display screen 140 is configured to display an image, a video, and the like. The display screen 140 includes a display panel. The display panel may use a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flex light-emitting diode, FLED), a mini-LED, a micro-LED, a micro-OLED, a quantum dot light-emitting diode (quantum dot light-emitting diode, QLED), or the like. In some embodiments, the Bluetooth device 100 may include one or more display screens 140.

A software system of the Bluetooth device 100 may use a layered architecture, an event-driven architecture, a microkernel architecture, a microservice architecture, or a cloud architecture. In embodiments of the present invention, an Android^{®} (Android) system with a layered architecture is used as an example to illustrate a software structure of the Bluetooth device 100.

FIG. 1B is a block diagram of the software structure of the Bluetooth device 100 according to an embodiment of the present invention.

In the layered architecture, software is divided into several layers, and each layer has a clear role and task. The layers communicate with each other through a software interface. In some embodiments, the Android system is divided into five layers from top to bottom: an application program layer, an application program framework layer (also referred to as a system framework layer), a system library and Android runtime layer, a hardware abstraction layer (hardware abstraction layer, HAL), and a kernel layer.

The application program layer may include several application programs (applications for short below). In this embodiment of this application, the application program layer may include a Bluetooth application (Bluetooth Application). The Bluetooth application is an application that can implement a function based on Bluetooth data, and may be a third-party application, such as a video playing application or an application provided by a Bluetooth device provider, or may be an application provided by the system, such as a gallery application or a system setting application.

The application program framework layer provides an application programming interface (Application Programming Interface, API) and a programming framework for the applications at the application program layer, including various components and services to support Android development of developers. In this embodiment of this application, the application program framework layer may include: a Bluetooth system service and a Bluetooth stack (bluetooth stack). The Bluetooth stack, which may also be referred to as a Bluetooth host (Bluetooth Host), may be configured to enable the Bluetooth device to perform Bluetooth communication in a manner stipulated in a Bluetooth protocol. The Bluetooth stack may be, for example, Bluedroid.

The system library and Android Runtime layer includes a system library and Android runtime (Android Runtime). The system library may include a plurality of functional modules, for example, a surface manager. The Android runtime is responsible for scheduling and management of the Android system, and specifically includes a core library and a virtual machine. The core library includes two parts. One part is a function that a java language needs to invoke, and the other part is a kernel library of Android. The virtual machine is configured to run an Android application developed by using the java language.

The HAL layer is an interface layer located between the operating system kernel and the hardware circuit. The HAL layer includes but is not limited to a Bluetooth HAL. The Bluetooth HAL may include a Bluetooth core specification abstraction layer and a Bluetooth application specification hardware abstraction layer, and is configured to provide a standard interface for invoking a Bluetooth API and a Bluetooth process, to ensure normal operation of the Bluetooth device.

The kernel layer is a layer between hardware and software. The kernel layer may include a Bluetooth driver and the like. The Bluetooth driver is configured to drive the Bluetooth processing module.

In an embodiment, when the Bluetooth application uses Bluetooth, the Bluetooth system service at the application program framework layer may be invoked, the Bluetooth system service invokes the Bluetooth stack, and then sends a digital signal to the Bluetooth processing module via the Bluetooth HAL and the Bluetooth driver, and the Bluetooth processing module converts the digital signal into an electromagnetic wave, and sends the electromagnetic wave to another Bluetooth device via an antenna.

The device search method in embodiments of this application is described below with reference to the structure of the Bluetooth device shown in FIG. 1A and FIG. 1B.

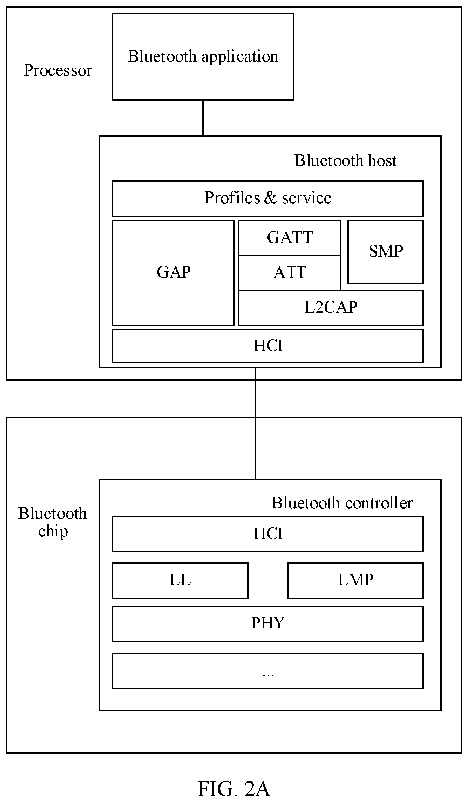

With reference to FIG. 1A and FIG. 1B, a Bluetooth architecture in the Bluetooth device mainly includes a Bluetooth application, a Bluetooth host, and a Bluetooth controller that are shown in FIG. 2A.

The Bluetooth application and the Bluetooth host may run in a processor of the Bluetooth device.

The Bluetooth application may be a third-party application, or may be an application that supports Bluetooth and that is provided by the system.

The Bluetooth host may correspond to the Bluetooth stack in the software structure shown in FIG. 1B.

The Bluetooth controller may correspond to the Bluetooth processing module shown in FIG. 1A, mainly includes a hardware part for implementing Bluetooth, such as a radio frequency circuit, and is configured to perform mutual conversion between a digital signal and an electromagnetic wave. The Bluetooth controller may specifically include: a Bluetooth low-energy controller (BLE Controller), a Bluetooth classic rate/enhanced data rate controller (BR/EDR Controller), an alternate MAC/PHY controller (Alternate MAC/PHY Controller, AMP Controller), and the like. The Bluetooth controller may be disposed in a Bluetooth chip, or integrated in a processor chip, such as an MCU. In FIG. 2A, for example, the Bluetooth controller is disposed in a Bluetooth chip.

The Bluetooth host and the Bluetooth controller each include several protocol layers.

For example, the Bluetooth host may include: an L2CAP protocol layer, an ATT/GATT protocol layer, a host controller interface (host controller interface, HCI) protocol layer, a GAP protocol layer, an SMP protocol layer, and the like.

The Bluetooth controller may include: a physical layer (PHY), a link layer (LL), a link management protocol layer (LMP), an HCI protocol layer, and the like. For functions of the protocol layers, refer to specific specifications of the Bluetooth protocol, and details are not described in embodiments of this application.

The Bluetooth host and the Bluetooth controller are connected through an HCI. The HCI is a standardized interface provided for communication between the Bluetooth host and the Bluetooth controller. With reference to FIG. 2A, the HCI includes a software part located in the Bluetooth host and a part located in the Bluetooth controller. Hardware corresponding to the HCI is a physical bus configured to connect a CPU and the Bluetooth chip, for example, a physical bus configured to implement a UART, USB, SDIO, PCI, I2C, I2S, or I3C protocol.

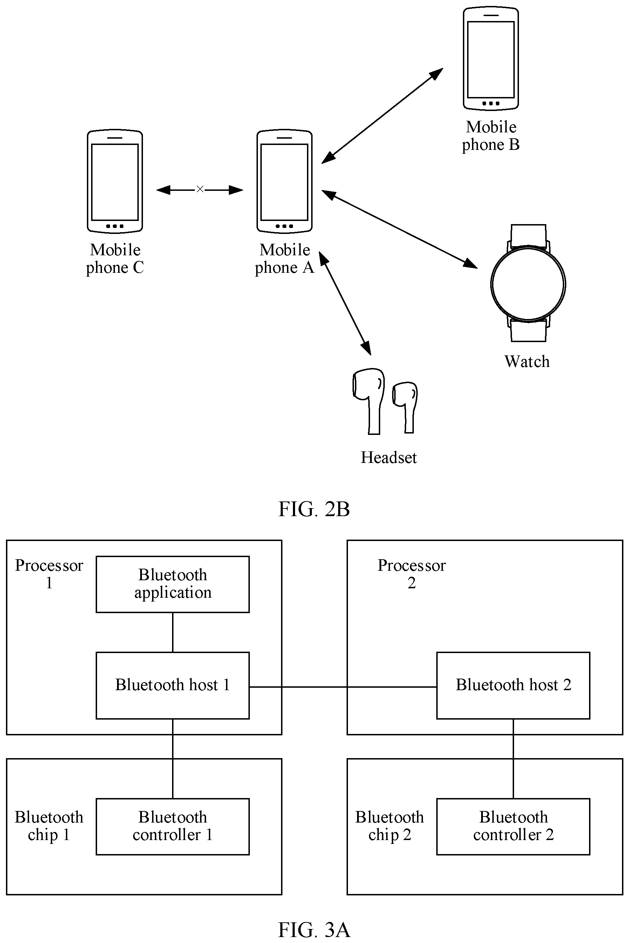

However, when the Bluetooth device is provided with only one Bluetooth controller, as a Bluetooth resource that can be provided by the Bluetooth controller is limited, if the Bluetooth device intends to connect to a plurality of other Bluetooth devices, a problem such as an insufficient quantity of filters (filter) in the Bluetooth controller occurs, which limits a quantity of other Bluetooth devices connected to the Bluetooth device. For example, as shown in FIG. 2B, assuming that a quantity of filters provided by a Bluetooth controller provided in a mobile phone A is 8, and the mobile phone A already connects to a mobile phone B, a watch, and a headset through Bluetooth, which occupy six filters, if the mobile phone A intends to further connect to a mobile phone C, and a quantity of filters required by the mobile phone C is greater than 2, the mobile phone A cannot connect to the mobile phone C through Bluetooth because a quantity of idle filters of the Bluetooth controller is only 2, which cannot meet the requirement of the mobile phone C for a quantity of filters.

Therefore, embodiments of this application provide a technical solution of disposing at least two Bluetooth controllers in a Bluetooth device, to increase Bluetooth resources available to the Bluetooth device, such as filters.

In embodiments of this application, a first Bluetooth device and a second Bluetooth device are included. The first Bluetooth device is a Bluetooth device that triggers Bluetooth communication with another Bluetooth device, and the second Bluetooth device is a Bluetooth device that performs Bluetooth communication with the first Bluetooth device.

In embodiments of this application, a possible implementation structure of the Bluetooth device in embodiments of this application is described by using an implementation structure in the first Bluetooth device as an example. It should be noted that, an implementation structure of the second Bluetooth device may be the same as or different from that of the first Bluetooth device, provided that the second Bluetooth device can implement Bluetooth communication with the first Bluetooth device.

As shown in FIG. 3A, for example, the Bluetooth device is provided with two Bluetooth hosts and two Bluetooth controllers. The first Bluetooth device provided in an embodiment of this application may include as follows:

A processor 1 is physically connected to a processor 2. The processor 1 is physically connected to a Bluetooth chip 1. The processor 2 is physically connected to a Bluetooth chip 2.

A Bluetooth application and a Bluetooth host 1 run in the processor 1, and a Bluetooth host 2 runs in the processor 2.

A Bluetooth controller 1 is disposed in the Bluetooth chip 1, and a Bluetooth controller 2 is disposed in the Bluetooth chip 2.

Optionally, the processor 1 and the processor 2 may be connected by using a physical bus, for example, a physical bus configured to implement a UART or I2S protocol.

For the first Bluetooth device shown in FIG. 3A, when the first Bluetooth device intends to connect to and communicate with another Bluetooth device through Bluetooth, both a Bluetooth resource of the Bluetooth controller 1 and a Bluetooth resource of the second Bluetooth controller are available, so that Bluetooth resources in the first Bluetooth device are increased, and the first Bluetooth device can simultaneously connect to more other Bluetooth devices. The scenario shown in FIG. 2B is still used as an example. Assuming that the mobile phone A includes two Bluetooth controllers each having eight filters, under the condition that the mobile phone B, the watch, and the headset already occupy six filters, the mobile phone A still has ten idle filters available for connecting to another Bluetooth device such as the mobile phone C.

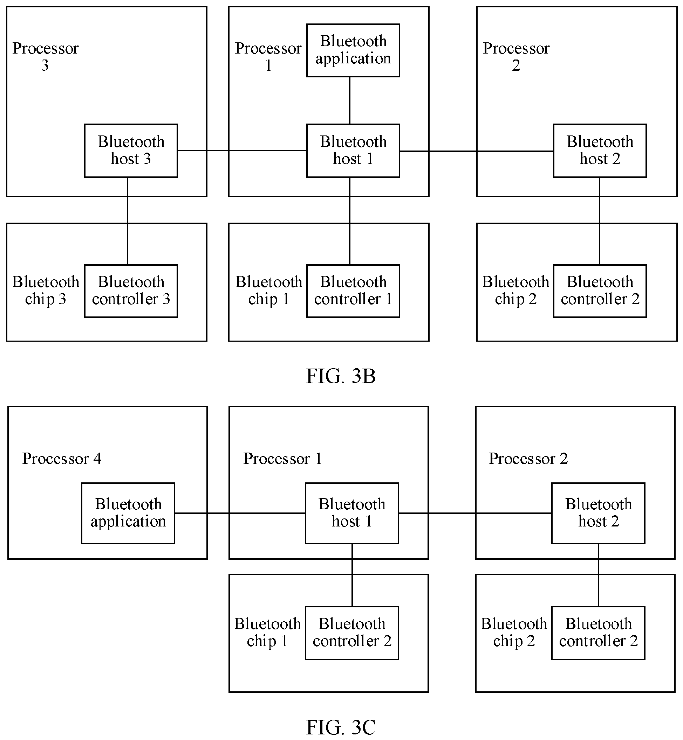

In another embodiment provided in this application, quantities of processors and Bluetooth chips in the first Bluetooth device shown in FIG. 3A may be further increased, for example, to a quantity M. M is an integer greater than or equal to 3. Correspondingly, quantities of Bluetooth hosts and Bluetooth controllers may also be increased. For example, based on the first Bluetooth device shown in FIG. 3A, a first Bluetooth device shown in FIG. 3B further has a processor 3 physically connected to the processor 1, a Bluetooth chip 3 connected to the processor 3, a Bluetooth host 3 running in the processor 3, and a Bluetooth controller 3 disposed in the Bluetooth chip 3. Therefore, the first Bluetooth device includes three Bluetooth hosts and three Bluetooth controllers. In this case, the first Bluetooth device can have more Bluetooth resources than the first Bluetooth device shown in FIG. 3A, so that the first Bluetooth device can simultaneously connect to more Bluetooth devices.

In the foregoing embodiments, for example, the Bluetooth application and the Bluetooth host 1 are located in the same processor 1. In another embodiment provided in this application, the Bluetooth application may be located in a different processor than the Bluetooth host 1, for example, the processor 2, or another processor other than the processor 1 and the processor 2. For example, in FIG. 3C, the Bluetooth application is located in a processor 4.

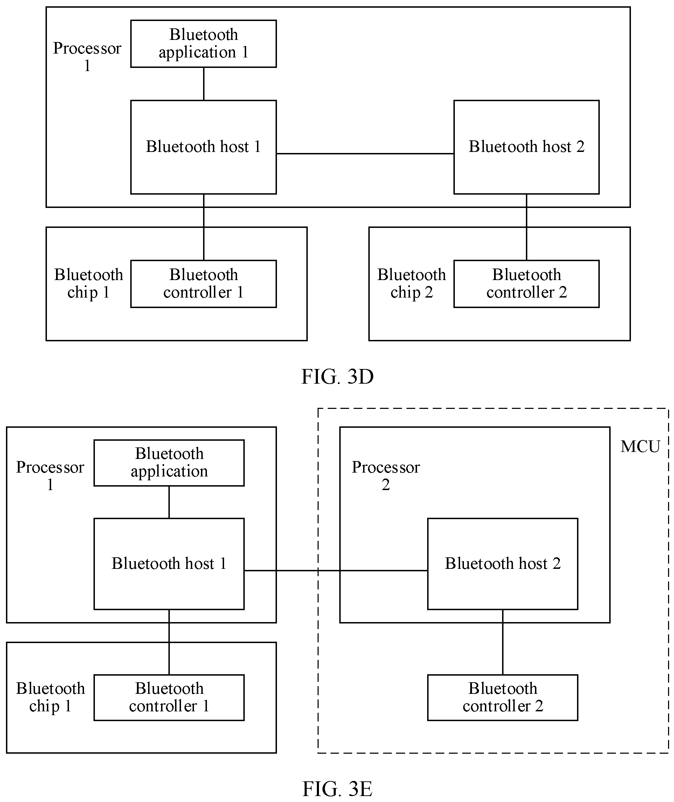

In the foregoing embodiments, for example, Bluetooth hosts are located in different processors. In another embodiment provided in this application, two or more of the Bluetooth hosts included in the first Bluetooth device may be located in a same processor. For example, as shown in FIG. 3D, a processor 1 is physically connected to both a Bluetooth chip 1 and a Bluetooth chip 2, a Bluetooth host 1 and a Bluetooth host 2 are both located in the processor 1, the Bluetooth host 1 is connected to a Bluetooth controller 1 in the Bluetooth chip 1, and the Bluetooth host 2 is connected to a Bluetooth controller 2 in the Bluetooth chip 2.

In the foregoing embodiments, for example, one Bluetooth host is connected to one Bluetooth controller. In another embodiment provided in this application, one Bluetooth host may be connected to a plurality of Bluetooth controllers.

In the foregoing embodiments, for example, the Bluetooth controller is disposed in the Bluetooth chip. In another embodiment provided in this application, the Bluetooth controller and the processor may be integrated in a same chip. For example, as shown in FIG. 3E, a processor 2 and a Bluetooth controller 2 may be implemented by using an MCU into which a Bluetooth controller is integrated.

To enable the first Bluetooth device to connect to and communicate with another Bluetooth device by using a plurality of Bluetooth controllers, embodiments of this application further provide a corresponding device search method.

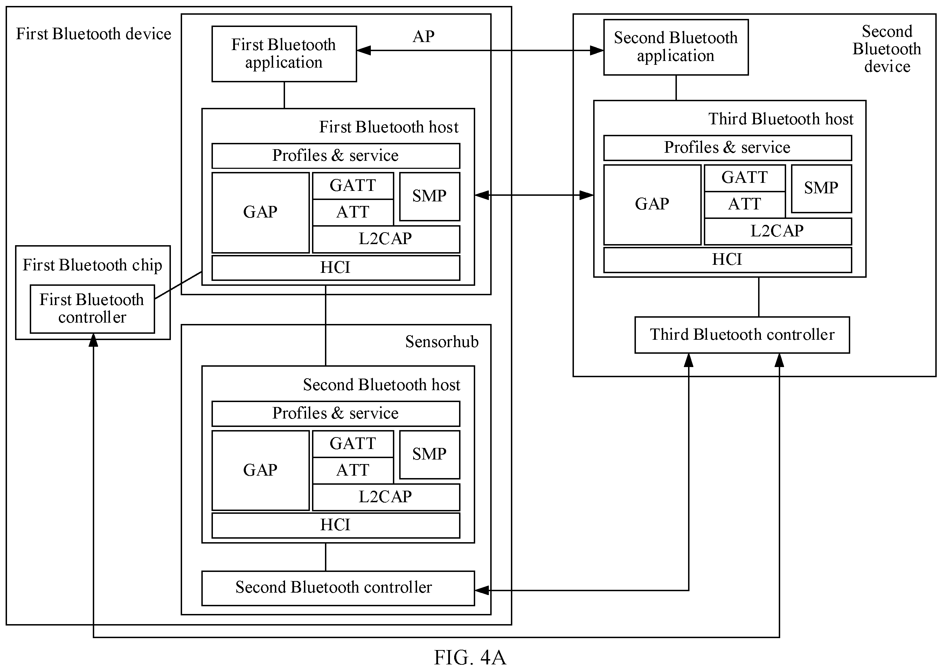

FIG. 4A is a diagram of a scenario of a device search method according to an embodiment of this application. As shown in FIG. 4A, the scenario includes: a first Bluetooth device and a second Bluetooth device.

The first Bluetooth device includes: a first Bluetooth application, a first Bluetooth host (for example, the Bluetooth host 1), a second Bluetooth host (for example, the Bluetooth host 2), a first Bluetooth controller (for example, the Bluetooth controller 1), and a second Bluetooth controller (for example, the Bluetooth controller 2). The first Bluetooth application and the first Bluetooth host are located in an AP, the first Bluetooth controller is located in a first Bluetooth chip, the second Bluetooth host is located in a sensorhub, the second Bluetooth controller is integrated in the sensorhub, the first Bluetooth application is connected to the first Bluetooth host, the first Bluetooth host is connected to the first Bluetooth controller and the second Bluetooth host, and the second Bluetooth host is connected to the second Bluetooth controller.

The second Bluetooth device includes: a second Bluetooth application, a third Bluetooth host, and a third Bluetooth controller. The second Bluetooth application is connected to the third Bluetooth host, and the third Bluetooth host is connected to the third Bluetooth controller.

There is an application layer logical link between the first Bluetooth application and the second Bluetooth application. Based on each layer of a Bluetooth stack, there is a corresponding logical link between the first Bluetooth host and the third Bluetooth host. For example, based on a GATT layer, there is a corresponding GATT link between the first Bluetooth host and the third Bluetooth host. Physical communication links may be established between the first Bluetooth controller and the third Bluetooth controller, and between the second Bluetooth controller and the third Bluetooth controller.

In the following embodiments, the device search method in embodiments of this application is illustrated with reference to the scenario example shown in FIG. 4A.

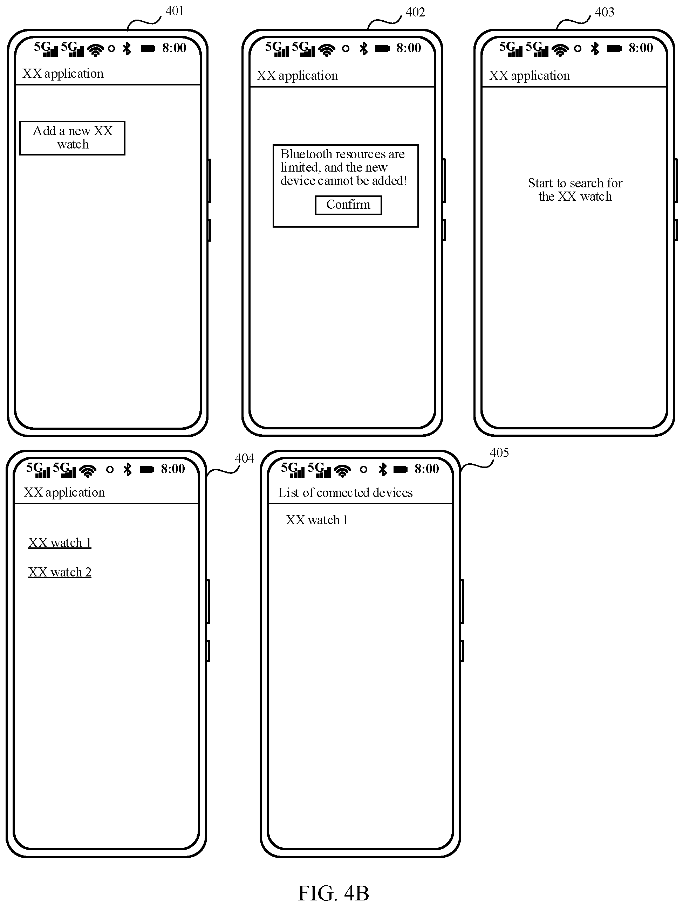

FIG. 4B is a diagram of an interface implementation of a device search method according to an embodiment of this application. As shown in FIG. 4B, it is assumed that the first Bluetooth application is an XX application, and Bluetooth of the first Bluetooth device is enabled.

A user selects a control "add a new XX watch" in a setting interface, for example, shown in 401, provided by the XX application. Correspondingly, the XX application detects a search request of the user for the XX watch.

If a total quantity of idle filters (filter) of all Bluetooth controllers in the first Bluetooth device is less than a quantity of filters required by the XX application for searching for the XX watch, the XX application displays a prompt interface, for example, shown in an interface 402, to the user, to prompt the user that Bluetooth resources are insufficient and a new device cannot be added. If the total quantity of idle filters of all the Bluetooth controllers in the first Bluetooth device is not less than the quantity of filters required by the XX application to search for the XX watch, the XX application may allocate a corresponding quantity of filters for XX, search for the XX watch by using the filters, display a search prompt interface, for example, shown in an interface 403, to the user, to prompt the user that the XX watch is being searched for, and display a device search result display interface, for example, shown in an interface 404, to the user after the search for the XX watch is completed. The device search result display interface may display a list of XX watches found by the first Bluetooth device. For example, the list displayed in the interface 404 includes: an XX Watch 1 and an XX Watch 2.

The user selects a watch, for example, the XX watch 1, from the list of XX watches. Correspondingly, the XX application detects the selection operation performed by the user on the XX watch 1, and determines the XX watch 1 as a second Bluetooth device for pairing. The XX application establishes a Bluetooth connection to the XX watch 1 by using the first Bluetooth device. Then, the XX application and the XX watch 1 can communicate with each other through Bluetooth. Further, in the device search method provided in this embodiment of this application, the XX application may communicate with the XX watch 1 by using any Bluetooth controller included in the first Bluetooth device, for example, the first Bluetooth controller and/or the second Bluetooth controller.

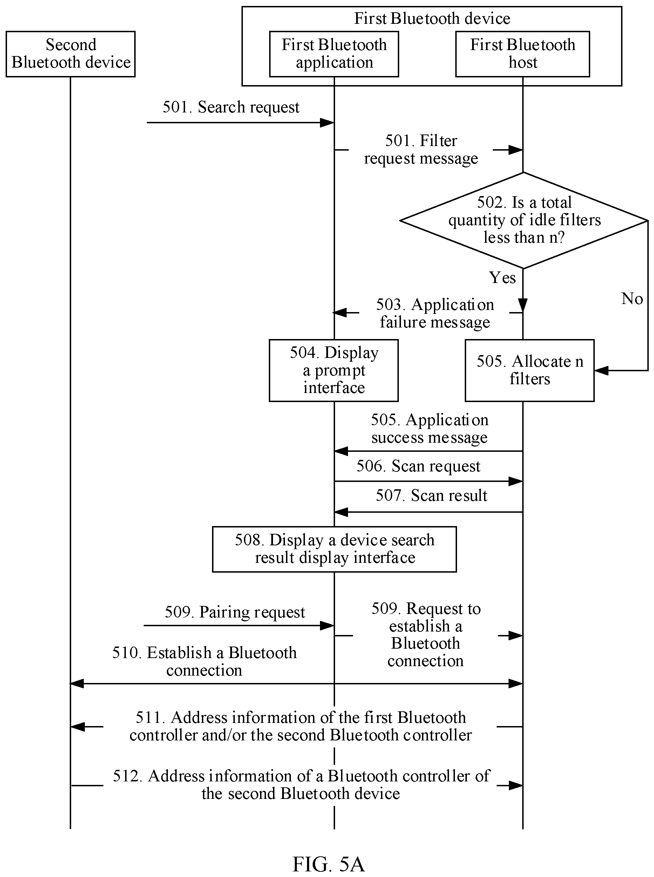

FIG. 5A is a schematic flowchart of a device search method based on the interface implementation shown in FIG. 4B according to an embodiment of this application. As shown in FIG. 5A, the method may include the following steps.

Step 501: The first Bluetooth application detects a search request of the user for a Bluetooth device, and sends a filter request message to the first Bluetooth host.

The filter request message is used to apply for a filter from the first Bluetooth host.

Optionally, the filter request message may include a quantity n of required filters.

The filter in this embodiment of this application is configured to record a filter condition for searching for a Bluetooth device. By setting a filter for a Bluetooth application to record a filter condition for searching for a Bluetooth device, a Bluetooth device that does not meet a requirement of the Bluetooth application in Bluetooth devices nearby can be filtered out.

The device search may also be referred to as device scan (scan).

A quantity of filters required by the Bluetooth application for searching for a Bluetooth device may be determined by the Bluetooth application based on the Bluetooth device to be searched for. A specific method is not limited in this embodiment of this application.

Step 502: The first Bluetooth host determines whether a total quantity of idle filters of all Bluetooth controllers is less than the quantity n of filters required by the first Bluetooth application. If the total quantity is less than the quantity n, step 503 is performed. If the total quantity is not less than the quantity n, step 505 is performed.

The idle filter is a filter that is in a Bluetooth controller and that is currently not occupied by another Bluetooth application.

Step 503: The first Bluetooth host sends an application failure message to the first Bluetooth application.

Step 504: The first Bluetooth application displays a prompt interface, and the procedure of this branch ends.

The prompt interface is, for example, shown in the interface 402.

Step 505: The first Bluetooth host allocates n filters to the first Bluetooth application from the idle filters of all the Bluetooth controllers, and sends an application success message to the first Bluetooth application. Then, step 506 is performed.

The application success message may include: filter IDs of the n filters, and a Bluetooth controller to which each filter belongs.

Optionally, if filter IDs in the first Bluetooth controller and the second Bluetooth controller are not repeated, or in other words, if a Bluetooth controller to which a filter belongs can be identified by using a filter ID, the Bluetooth controller to which each filter belongs in the application success message may be omitted.

Optionally, if the n filters allocated by the first Bluetooth host include a filter of the second Bluetooth controller, the first Bluetooth host may implement allocation of the filter in the second Bluetooth controller by using the second Bluetooth host. For example, if the n filters include a filter of the second Bluetooth controller, the first Bluetooth host may indicate, by using the second Bluetooth host, the second Bluetooth controller to allocate the filter to the first Bluetooth application.

Through processing of the foregoing steps, the first Bluetooth host manages and allocates filters of two Bluetooth controllers, so that the first Bluetooth device can use the filters of the two Bluetooth controllers to support the first Bluetooth application in searching for a device, thereby increasing a quantity of Bluetooth devices to which the first Bluetooth device can simultaneously connect.

Step 506: The first Bluetooth application sends a search request to the first Bluetooth host. The search request is used to request the first Bluetooth host to search for the Bluetooth device.

Step 507: The first Bluetooth host searches for the Bluetooth device by using the n filters allocated to the first Bluetooth application, and sends a search result to the first Bluetooth application.

Optionally, If the n filters allocated by the first Bluetooth host include a filter of the second Bluetooth controller, the first Bluetooth host may trigger, by using the second Bluetooth host, the second Bluetooth controller to search for the Bluetooth device by using the filter.

Through processing of the foregoing steps, the first Bluetooth host can trigger two Bluetooth controllers to search for the Bluetooth device by using filters, so that the first Bluetooth device can use filters of a plurality of Bluetooth controllers to support the first Bluetooth application in searching for the Bluetooth device.

Step 508: The first Bluetooth application displays a device search result display interface.

Step 509: The first Bluetooth application detects, in the device search result display interface, a pairing request operation performed by the user on the second Bluetooth device, and requests the first Bluetooth host to establish a Bluetooth connection.

Step 510: The first Bluetooth host establishes a Bluetooth connection to the second Bluetooth device.

Optionally, the Bluetooth connection may include a GATT connection based on a GATT protocol.

Step 511: The first Bluetooth host sends address information of the first Bluetooth controller and/or address information of the second Bluetooth controller to the second Bluetooth device.

Optionally, in this embodiment of this application, the first Bluetooth host may decide that the first Bluetooth application uses the first Bluetooth controller and/or the second Bluetooth controller to communicate with the second Bluetooth device. A specific decision method is not limited in this embodiment of this application.

Step 512: The first Bluetooth host receives address information of the second Bluetooth device sent by the second Bluetooth device.

Optionally, if the first Bluetooth host decides that the first Bluetooth application can use the first Bluetooth controller to communicate with the second Bluetooth device, the first Bluetooth host may add the address information of the second Bluetooth device to the first Bluetooth controller. Then, the first Bluetooth controller may perform address resolving on a received message based on the address information of the second Bluetooth device, to implement Bluetooth communication between the first Bluetooth controller and the second Bluetooth device.

Optionally, if the first Bluetooth host decides that the first Bluetooth application can use the second Bluetooth controller to communicate with the second Bluetooth device, the first Bluetooth host may add the address information of the second Bluetooth device to the second Bluetooth controller by using the second Bluetooth host. Then, the second Bluetooth controller may perform address resolving on a received message based on the address information of the second Bluetooth device, to implement Bluetooth communication between the second Bluetooth controller and the second Bluetooth device.

Through processing of the foregoing steps, the first Bluetooth application can communicate with the second Bluetooth device by using the first Bluetooth controller and/or the second Bluetooth controller, which increases Bluetooth resources available when the first Bluetooth device communicates with another Bluetooth device, so that the first Bluetooth device not only can support connection to more Bluetooth devices, but also can increase communication resources between the first Bluetooth application and the another Bluetooth device, thereby improving a communication speed and efficiency.

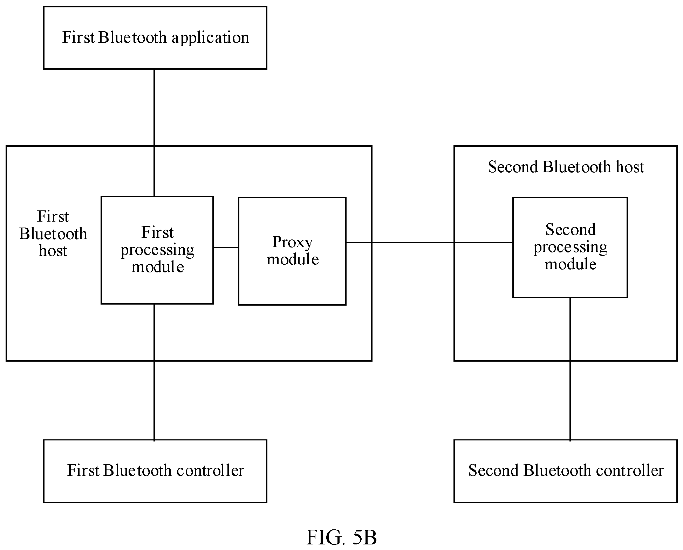

With reference to FIG. 5B, the first Bluetooth host may include a first processing module and a proxy module.

The first processing module may communicate with the first Bluetooth application and the first Bluetooth controller, and is configured to manage a filter in the first Bluetooth controller. Optionally, the first processing module may be implemented by using a scan/filter manager (scan/filter manager) provided in the first Bluetooth host. The scan/filter manager (scan/filter manager) may be located at any protocol layer in the first Bluetooth host, for example, an HCI protocol layer.

The proxy module is configured to implement communication between the first Bluetooth host and the second Bluetooth host. Optionally, the proxy module may be located at the HCI protocol layer in the first Bluetooth host. A processor such as an AP usually has a hidle service (hidle service), configured to access a device node to which an MCU is mapped. A module named HCI proxy (HCI proxy) is usually preconfigured in the hidle service, to interface with the HCI layer of the standard Bluetooth stack. Optionally, the proxy module may be implemented by using an HCI proxy (HCI proxy) module at the HCI protocol layer in the first Bluetooth host.

The second Bluetooth host may include a second processing module, which may communicate with the proxy module in the first Bluetooth host and the second Bluetooth controller, and is configured to manage a filter in the second Bluetooth controller. Optionally, the second processing module may be implemented by using a dual-ble manager in the second Bluetooth host. The dual-ble manager may be located at any protocol layer in the first Bluetooth host, for example, an HCI protocol layer.

Specific implementations of the method shown in FIG. 5A in different scenarios are illustrated below with reference to the structure shown in FIG. 5B.

In an embodiment, for example, the user intends to add a Bluetooth watch in the first Bluetooth application. It is assumed that a quantity of filters required for searching for the Bluetooth watch is n, a quantity of idle filters in the first Bluetooth controller is m, and m is greater than or equal to n. In this embodiment, all filters in the second Bluetooth controller may be in an idle state. For example, it is assumed that a quantity of filters in a first Bluetooth controller and a quantity of filters in a second Bluetooth controller in a mobile phone A are both 8, a mobile phone B and a headset to which the mobile phone A already connects occupy four filters in the first Bluetooth controller, and a quantity of filters that the to-be-added Bluetooth watch needs to occupy is 3, which is less than a quantity 4 of idle filters in the first Bluetooth controller.

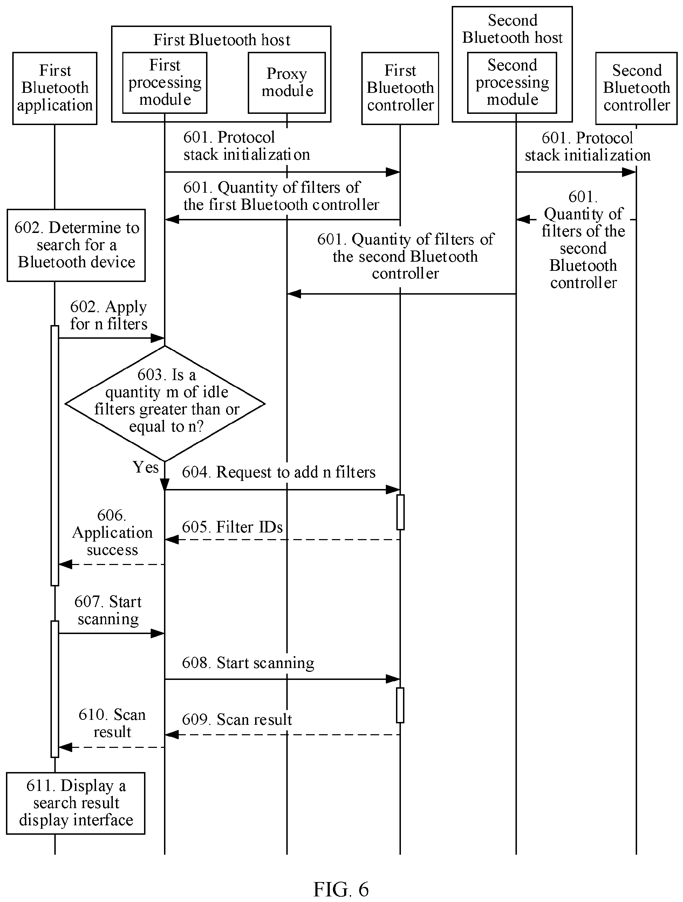

With reference to FIG. 6, the device search method in this embodiment of this application may include the following steps.

Step 601: The first processing module of the first Bluetooth host obtains a quantity of filters of the first Bluetooth controller from the first Bluetooth controller during protocol stack initialization. The second processing module of the second Bluetooth host obtains a quantity of filters of the second Bluetooth controller from the second Bluetooth controller during protocol stack initialization, and sends the quantity of filters of the second Bluetooth controller to the proxy module of the first Bluetooth host.

Optionally, the first processing module may obtain the quantity of filters of the first Bluetooth controller from the first Bluetooth controller by using an HCI_LE_Read_Filter_Accept_List_Size command.

Optionally, the second processing module may obtain the quantity of filters of the second Bluetooth controller from the second Bluetooth controller by using an HCI_LE_Read_Filter_Accept_List_Size command.

Optionally, this step may be triggered when the first Bluetooth device is turned on or the user enables a Bluetooth function in the first Bluetooth device.

Step 602: The first Bluetooth application detects, in a setting interface, a search request of the user for a Bluetooth device, and applies for n filters from the first processing module of the first Bluetooth host.

Optionally, the first Bluetooth application may further send, to the first Bluetooth host, a filter condition required for searching for the Bluetooth device (for example, a Bluetooth watch).

Step 603: The first processing module determines whether a quantity m of idle filters in the first Bluetooth controller is greater than or equal to n. If the quantity m is greater than or equal to n, step 604 is performed.

Processing when the first processing module determines that the quantity m of idle filters in the first Bluetooth controller is not greater than or equal to n is described in a subsequent embodiment, and details are not described herein.

Step 604: The first processing module requests the first Bluetooth controller to add (add) n filters.

Step 605: The first Bluetooth controller allocates n filters to the first Bluetooth application, and sends filter identifiers (ID) of the n filters to the first processing module.

The n filters are configured to record the filter condition required for searching for the Bluetooth device.

Step 606: The first processing module indicates a filter application success to the first Bluetooth application.

Step 607: The first Bluetooth application requests the first processing module to search for the Bluetooth device.

Optionally, the first Bluetooth application may send the filter IDs of the n filters to the first processing module.

Step 608: The first processing module indicates the first Bluetooth controller to start to search for the Bluetooth device by using the n filters allocated to the first Bluetooth application.

Optionally, the first processing module may send the filter IDs of the n filters to the first Bluetooth controller, to indicate the first Bluetooth controller to search for the Bluetooth device by using the n filters allocated to the first Bluetooth application.

Step 609: The first Bluetooth controller sends a search result to the first processing module.

The search result may include a list of found Bluetooth devices, for example, the list of XX watches in FIG. 4.

Step 610: The first processing module sends the search result to the first Bluetooth application.

Step 611: The first Bluetooth application displays a device search result display interface based on the search result.

The device search result display interface is, for example, shown in the interface 404.

For a step after the device search result display interface is displayed, refer to descriptions in FIG. 5A and a subsequent embodiment, and details are not described herein.

In the method, communication between the first Bluetooth host and the second Bluetooth host is implemented by using a proxy policy. For example, the first Bluetooth host uses a proxy to indicate the second Bluetooth host to allocate an idle filter in the second Bluetooth controller to the first Bluetooth application, and search for a device by using the idle filter in the second Bluetooth controller, and then a search result is sent to the first Bluetooth host by using a proxy mechanism. In this way, the first Bluetooth host manages filter resources of the two Bluetooth controllers together, and the first Bluetooth application can use the filter resources of the two Bluetooth controllers without perceiving any difference.

In an embodiment, the example that the user intends to add a Bluetooth watch in the first Bluetooth application is still used. It is assumed that a quantity of filters required for searching for the Bluetooth watch is n, a quantity of idle filters in the first Bluetooth controller is m, m is less than n, a quantity of idle filters in the second Bluetooth controller is p, and p is greater than or equal to (n-m), that is, a total quantity (m+p) of idle filters in the first Bluetooth controller and the second Bluetooth controller is greater than n. For example, it is assumed that a quantity of filters in a first Bluetooth controller and a quantity of filters in a second Bluetooth controller in a mobile phone A are both 8, a mobile phone B and a headset to which the mobile phone A already connects occupy six filters in the first Bluetooth controller, a quantity of filters that the to-be-added Bluetooth watch needs to occupy is 3, which is greater than a quantity 2 of idle filters in the first Bluetooth controller, and a difference 1 between the two is less than the quantity 8 of idle filters in the second Bluetooth controller.

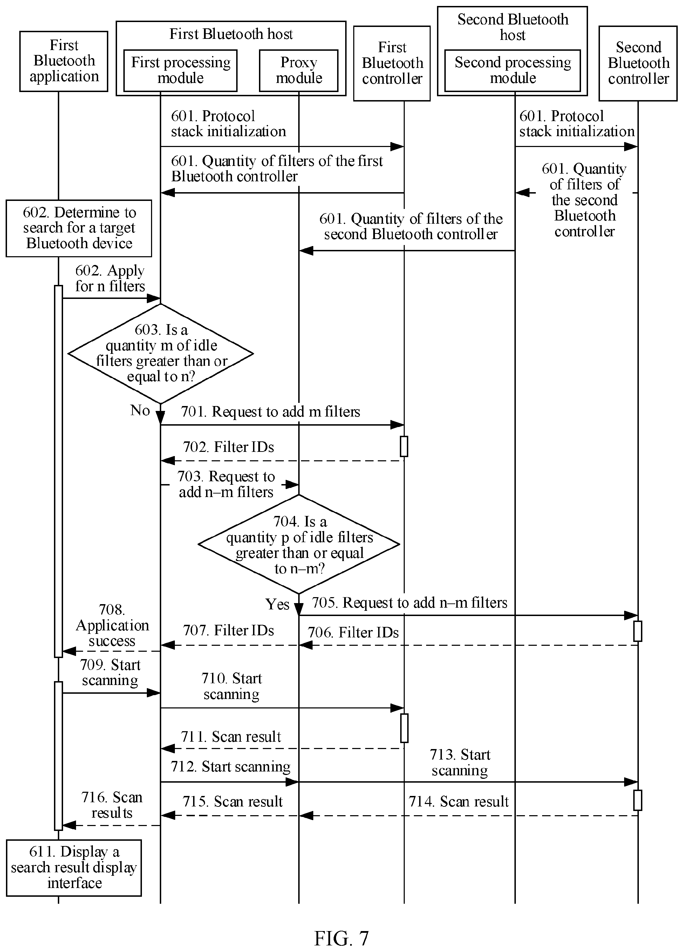

With reference to FIG. 7, with respect to the method shown in FIG. 6, the device search method in this embodiment of this application replaces step 604 to step 610 with the following step 701 to step 716.

Step 701: The first processing module requests the first Bluetooth controller to add m filters.

Step 702: The first Bluetooth controller allocates m filters to the first Bluetooth application, and sends filter IDs of the m filters to the first processing module.

Step 703: The first processing module requests the proxy module to add n-m filters.

An execution sequence between steps 701 to 702 and steps 704 to 707 is not limited.

In an embodiment, step 701 may be performed after step 707, to avoid a situation that a quantity of idle filters in the second Bluetooth controller is less than n-m, resulting in that the first Bluetooth controller needs to release the m filters after adding the m filters to the first Bluetooth application.

Step 704: The proxy module determines whether a quantity p of idle filters in the second Bluetooth controller is greater than or equal to n-m. If the quantity p is greater than or equal to n-m, step 705 is performed.

Processing when the proxy module determines that the quantity p of idle filters in the second Bluetooth controller is not greater than or equal to n-m is described in a subsequent embodiment, and details are not described herein.

Step 705: The proxy module requests the second Bluetooth controller to add n-m filters.

Step 706: The second Bluetooth controller allocates n-m filters to the first Bluetooth application, and sends filter IDs of the n-m filters to the proxy module.

Optionally, in step 705 and step 706, information between the proxy module and the second Bluetooth controller may be forwarded by the second Bluetooth host, for example, may be forwarded by the second processing module in the second Bluetooth host.

Step 707: The proxy module sends the filter IDs of the n-m filters to the first processing module.

Step 708: The first processing module indicates a filter application success to the first Bluetooth application.

Step 709: The first Bluetooth application requests the first processing module to search for the Bluetooth device.

Optionally, the first Bluetooth application may send the filter IDs to the first processing module.

Step 710: The first processing module indicates the first Bluetooth controller to start to search for the Bluetooth device by using the m filters allocated to the first Bluetooth application.

Optionally, the first processing module may send the filter IDs of the m filters in the first Bluetooth controller to the first Bluetooth controller, to indicate the first Bluetooth controller to search for the Bluetooth device by using the m filters allocated to the first Bluetooth application.

Step 711: The first Bluetooth controller sends search results of the m filters to the first processing module.

Step 712: The first processing module indicates the proxy module to start to search for the Bluetooth device by using the n-m filters allocated to the first Bluetooth application.

Optionally, the first processing module may send, to the proxy module, the filter IDs of the n-m filters allocated by the second Bluetooth controller to the first Bluetooth application, to indicate information about a filter that the proxy module needs to use.

Step 713: The proxy module indicates the second Bluetooth controller to start to search for the Bluetooth device by using the n-m filters allocated to the first Bluetooth application.

Optionally, the proxy module may send, to the second Bluetooth controller, the filter IDs of the n-m filters allocated by the second Bluetooth controller to the first Bluetooth application, so that the second Bluetooth controller searches for the Bluetooth device by using the n-m filters allocated to the first Bluetooth application.

Step 714: The second Bluetooth controller sends search results of the n-m filters to the proxy module.

Optionally, in step 713 and step 714, information between the proxy module and the second Bluetooth controller may be forwarded by the second Bluetooth host, for example, may be forwarded by the second processing module in the second Bluetooth host.

Step 715: The proxy module sends the search results of the n-m filters to the first processing module.

An execution sequence between steps 710 to 711 and steps 712 to 715 is not limited.

Step 716: The first processing module sends the n search results to the first Bluetooth application.

It should be noted that, in the method shown in FIG. 7, the quantity m of idle filters in the first Bluetooth controller may be equal to 0. In this case, steps 701 to 702 and steps 710 to 711 may be omitted, and the method shown in FIG. 7 is actually that the second Bluetooth controller allocates n filters to the first Bluetooth application, and searches for the Bluetooth device by using the n filters.

In an embodiment, the example that the user intends to add a Bluetooth watch in the first Bluetooth application is still used. It is assumed that a quantity of filters required for searching for the Bluetooth watch is n, a quantity of idle filters in the first Bluetooth controller is m, m is less than n, a quantity of idle filters in the second Bluetooth controller is p, and p is less than (n-m), that is, a total quantity (m+p) of idle filters in the first Bluetooth controller and the second Bluetooth controller is less than n. For example, it is assumed that a quantity of filters in a first Bluetooth controller and a quantity of filters in a second Bluetooth controller in a mobile phone A are both 8, a mobile phone B and a headset to which the mobile phone A already connects occupy six filters in the first Bluetooth controller, a quantity of filters that the to-be-added Bluetooth watch needs to occupy is 12, which is greater than a quantity 2 of idle filters in the first Bluetooth controller, and a difference 10 between the two is greater than the quantity 8 of idle filters in the second Bluetooth controller.

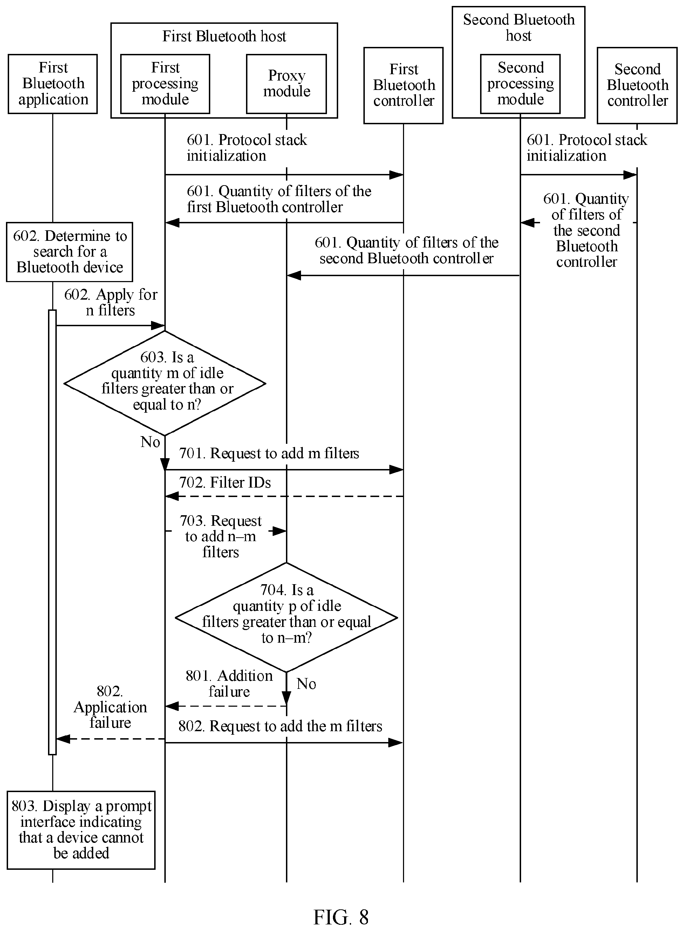

With reference to FIG. 8, with respect to the method shown in FIG. 7, in step 704, when the proxy module determines whether the quantity p of idle filters in the second Bluetooth controller is greater than or equal to n-m, a determining result is that the quantity p is less than n-m, and step 801 is performed.

Step 801: The proxy module indicates a filter addition failure to the first processing module.

Step 802: The first processing module indicates the filter addition failure to the first Bluetooth application, and indicates the first Bluetooth controller to release the m filters allocated to the first Bluetooth application.

Optionally, if steps 701 to 702 are performed after step 801, steps 701 to 702 and the step of indicating the first Bluetooth controller to release the m filters allocated to the first Bluetooth application in this step may be omitted.

Step 803: The first Bluetooth application displays a prompt interface indicating that a device cannot be added.

The prompt interface is, for example, shown in the interface 602.

In the device search method shown in the foregoing embodiments, an idle filter in the first Bluetooth controller is preferentially allocated to the first Bluetooth application, and a shortfall is made up by an idle filter in the second Bluetooth controller. This application may also provide other solutions for adding a filter to the first Bluetooth application. For example:
In an embodiment, the idle filter in the second Bluetooth controller may be preferentially allocated to the first Bluetooth application, and the idle filter in the first Bluetooth controller is used to make up a shortfall to the quantity of filters in the second Bluetooth controller. For a specific implementation, refer to the foregoing embodiment. Details are not described herein again.

In another embodiment, when the quantity m of idle filters in the first Bluetooth controller is greater than or equal to n, the filter in the first Bluetooth controller may be preferentially allocated to the first Bluetooth application. When m is less than n, the filter in the second Bluetooth controller may be preferentially allocated to the first Bluetooth application, and when a shortfall occurs, the filter in the first Bluetooth controller is used to make up the shortfall.

An implementation of step 511 and step 512 in FIG. 5A is illustrated below.

In an embodiment, after the first Bluetooth host establishes a Bluetooth connection to the second Bluetooth device, when pairing with the second Bluetooth device, the first Bluetooth host may send, to the second Bluetooth device through the Bluetooth connection established between the first Bluetooth host and the second Bluetooth device, address information, for example, an identity resolving key (Identity Resolving Key, IRK), of a Bluetooth controller that can be used by the first Bluetooth application, to complete the pairing. The IRK of the Bluetooth controller is generated based on a MAC address of the Bluetooth controller.

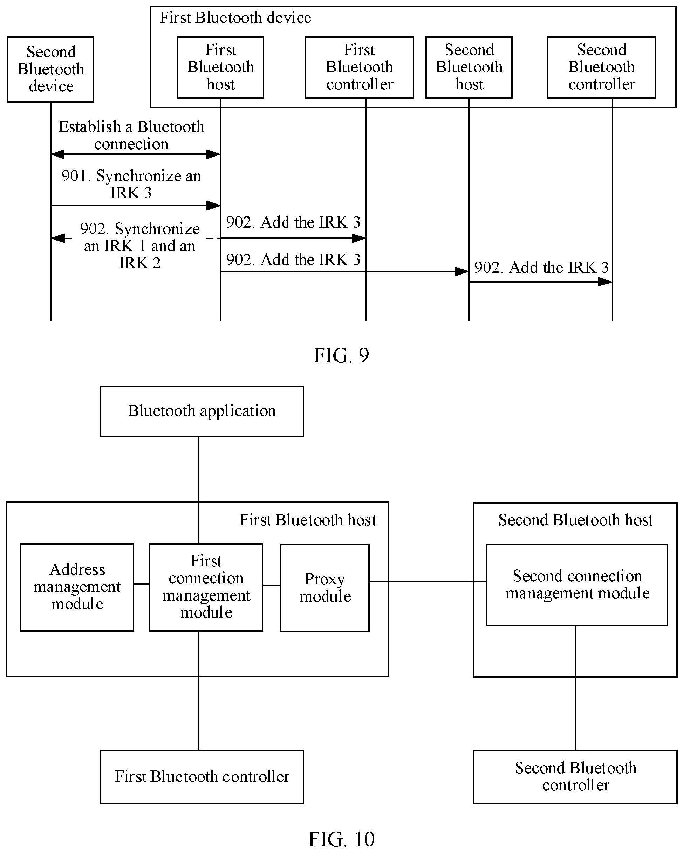

For example, if the first Bluetooth host decides that the first Bluetooth application may use the first Bluetooth controller and the second Bluetooth controller to communicate with the second Bluetooth device, as shown in FIG. 9:
After the first Bluetooth host establishes the Bluetooth connection to the second Bluetooth device, the second Bluetooth device sends an IRK 3 of a local Bluetooth controller to the first Bluetooth host through the Bluetooth connection, the first Bluetooth host sends an IRK 1 of the first Bluetooth controller and an IRK 2 of the second Bluetooth controller to the second Bluetooth device, and the first Bluetooth host adds the received IRK 3 to the first Bluetooth controller, and adds the IRK 3 to the second Bluetooth controller by using the second Bluetooth host.

Through the foregoing pairing processing, two IRK pairs, namely, (IRK 3, IRK 1) and (IRK 3, IRK 2), are recorded in the second Bluetooth device, to communicate with the first Bluetooth controller and the second Bluetooth controller respectively.

The first Bluetooth controller records (IRK 1, IRK 3), to communicate with the second Bluetooth device.

The second Bluetooth controller records (IRK 2, IRK 3), to communicate with the second Bluetooth device.

With reference to FIG. 10, in an embodiment, the first Bluetooth host may include: an address management module, a first connection management module, and a proxy module.

The address management module is configured to manage the address information, for example, the IRK 1, of the first Bluetooth controller and the address information, for example, the IRK 2, of the second Bluetooth controller.

The first connection management module is configured to: establish a Bluetooth connection to another Bluetooth device, for example, the second Bluetooth device, and trigger scanning of a paired Bluetooth device, for example, the second Bluetooth device. Optionally, the first connection management module may be implemented by using a dual-BLE controller (dual-ble manager) provided by a GATT service (gatt service) at a GATT protocol layer in the first Bluetooth host.

The proxy module is configured to implement communication between the first Bluetooth host and the second Bluetooth host. Optionally, the proxy module may be located at the HCI protocol layer in the first Bluetooth host. Optionally, the proxy module may be implemented by using an HCI proxy (HCI proxy) at the HCI protocol layer in the first Bluetooth host.

The second Bluetooth host may include a second connection management module, which may communicate with the proxy module and the second Bluetooth device, and is configured to trigger scanning of a paired Bluetooth device, for example, the second Bluetooth device. Optionally, the second connection management module may be implemented by using a dual-ble manager in the second Bluetooth host. The dual-ble manager may be located at a GATT protocol layer in the first Bluetooth host.

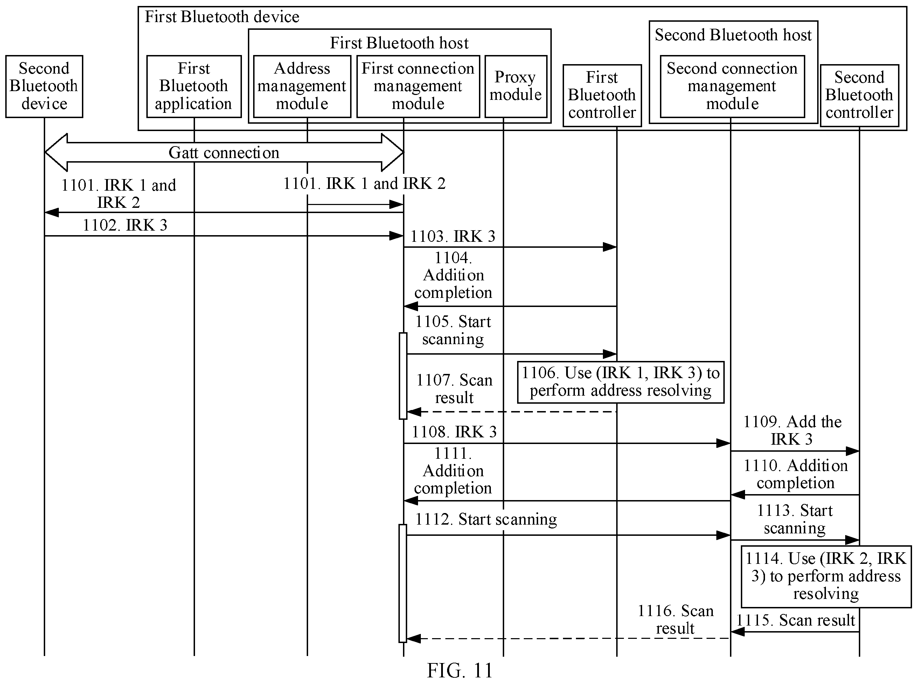

As shown in FIG. 11, an implementation of the method shown in FIG. 9 is illustrated based on the structure shown in FIG. 10.

With reference to FIG. 11, the method may include the following steps.

Step 1101: After establishing the Bluetooth connection to the second Bluetooth device by using the GATT protocol, the first connection management module obtains the IRK 1 of the first Bluetooth controller and the IRK 2 of the second Bluetooth controller from the address management module, and sends the IRK 1 and the IRK 2 to the second Bluetooth device through the Bluetooth connection.

Optionally, the first connection management module may decide that the first Bluetooth application uses the first Bluetooth controller and/or the second Bluetooth controller to communicate with the second Bluetooth device. A specific decision method is not limited in this embodiment of this application. FIG. 11 shows an example of deciding that the first Bluetooth application uses the first Bluetooth controller and the second Bluetooth controller to communicate with the second Bluetooth device.

After receiving the IRK 1 and the IRK 2, the second Bluetooth device forms two IRK pairs, namely, (IRK 1, IRK 3) and (IRK 2, IRK 3), with the IRK 3 of the local Bluetooth controller, to communicate with the first Bluetooth controller and the second Bluetooth controller respectively by using the local Bluetooth controller.

Step 1102: The first connection management module receives the IRK 3 of the Bluetooth controller sent by the second Bluetooth device.

Step 1103: The first connection management module adds the IRK 3 to the first Bluetooth controller.

Step 1104: The first Bluetooth controller adds the IRK 3 to a Resolving List, and indicates IRK addition completion to the first connection management module after the addition is completed.

After the first Bluetooth controller adds the IRK 3, the Resolving List records an IRK pair (IRK 1, IRK 3), to communicate with the Bluetooth controller of the second Bluetooth device. For example, as shown in the following step 1105 to step 1107, searching for the second Bluetooth device by the first Bluetooth controller is implemented.

Optionally, the first connection management module may add the IRK 3 to the Resolving List of the first Bluetooth controller by using an HCI_LE_Add_Device_To_Resolving_List command.

For a specific implementation of the HCI_LE_Add_Device_To_Resolving_List command, refer to Table 1 below.

**Table 1**

| Command (command) | OCF | Command parameters (Command Parameters) | Return parameters (return parameters) |
|---|---|---|---|
| HCI_LE_Add_Device_To_ Resolving_List | 0x0027 | Peer identity address type (Peer_Identity_Address_Type), peer identifier address (Peer_Identity_Address), peer IRK (Peer_IRK), and local IRK (Local IRK) | Status (status) |

Step 1105: The first connection management module indicates the first Bluetooth controller to start device search.

Step 1106: The first Bluetooth controller uses (IRK 1, IRK 3) to perform address resolving during device search.

Step 1107: The first Bluetooth controller sends a device search result to the first connection management module.

Step 1108: The first connection management module sends the IRK 3 to the second connection management module.

Step 1109: The second connection management module adds the IRK 3 to the second Bluetooth controller.

Step 1110: The second Bluetooth controller adds the IRK 3 to a Resolving List, and indicates IRK addition completion to the second connection management module after the addition is completed.

After the second Bluetooth controller adds the IRK 3, the Resolving List records an IRK pair (IRK 2, IRK 3), to communicate with the Bluetooth controller of the second Bluetooth device. For example, as shown in the following step 1111 to step 1116, searching for the second Bluetooth device by the second Bluetooth controller is implemented.

Step 1111: The second connection management module feeds back an addition completion message to the first connection management module.

Step 1112: The first connection management module indicates the second connection management module to start device search.

Step 1113: The second connection management module indicates the second Bluetooth controller to start device search.

Step 1114: The first Bluetooth controller uses (IRK 2, IRK 3) to perform address resolving during device search.

Step 1115: The second Bluetooth controller sends a device search result to the second connection management module.

Step 1116: The second connection management module sends the search result to the first connection management module.

Optionally, information between the second connection management module and the first connection management module may be forwarded by the proxy module.

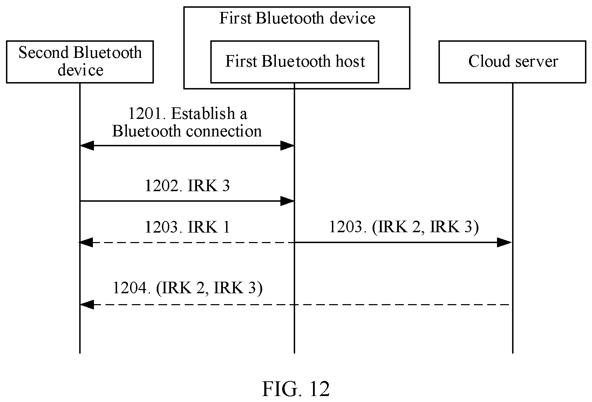

In another embodiment, as shown in FIG. 12, after the first Bluetooth host establishes a Bluetooth connection to the second Bluetooth device, when pairing with the second Bluetooth device, the first Bluetooth host may send the address information, for example, the IRK 1, of the first Bluetooth controller to the second Bluetooth device through the Bluetooth connection established between the first Bluetooth host and the second Bluetooth device, to complete the pairing. For another Bluetooth controller that can be used by the first Bluetooth application, for example, the second Bluetooth controller, address information, for example, the IRK 2, of the another Bluetooth controller may be uploaded by the first Bluetooth host to a cloud server by using the first Bluetooth device, and the second Bluetooth device may obtain, from the cloud server, the address information of the another Bluetooth controller in the first Bluetooth device other than the first Bluetooth controller.

For example, if the first Bluetooth host decides that the first Bluetooth application may use the first Bluetooth controller and the second Bluetooth controller to communicate with the second Bluetooth device, as shown in FIG. 12:

After the first Bluetooth host establishes the Bluetooth connection to the second Bluetooth device, the second Bluetooth device sends the IRK 3 of the local Bluetooth controller to the first Bluetooth host through the Bluetooth connection, and the first Bluetooth host sends the IRK 1 of the first Bluetooth controller to the second Bluetooth device. The first Bluetooth host uploads, to the cloud server, an IRK pair (IRK 2, IRK 3) formed by the IRK 2 of the second Bluetooth controller and the received IRK 3. The second Bluetooth device downloads the IRK pair (IRK 2, IRK 3) from the cloud server.

A procedure in which the first Bluetooth host adds the IRK 3 to the first Bluetooth controller and the second Bluetooth controller is omitted in FIG. 12. For details, refer to FIG. 9, and details are not described herein again.

Through the foregoing procedure, the IRK 2 of the second Bluetooth controller is also transmitted to the second Bluetooth device, so that communication can also be implemented between the second Bluetooth controller and the second Bluetooth device.

Optionally, the first Bluetooth device and the second Bluetooth device may use a same user account when logging in to the cloud server, to implement uploading and downloading of the IRK pair (IRK 2, IRK 3).

In another embodiment, a MAC address of the second Bluetooth controller may be derived based on a MAC address of the first Bluetooth controller by using a preset algorithm. A specific implementation of the algorithm is not limited in this embodiment of this application. In this case, the first Bluetooth device may not synchronize the IRK 2 of the second Bluetooth controller to the second Bluetooth device in the manner in the foregoing embodiment. Instead, the second Bluetooth device derives the IRK 2 of the second Bluetooth controller based on the IRK 1 of the first Bluetooth controller by using a specific algorithm, to obtain the IRK pair (IRK 2, IRK 3). A specific implementation of the algorithm is not limited in this embodiment of this application.

An embodiment of this application further provides a first Bluetooth device, including a processor, a memory, and a Bluetooth controller. The processor is configured to implement the method provided in the foregoing embodiments.

An embodiment of this application further provides a computer-readable storage medium. The computer-readable storage medium stores a computer program. When the computer program is run on a computer, the computer is enabled to perform the method provided in embodiments of this application.

An embodiment of this application further provides a computer program product. The computer program product includes a computer program. When the computer program is run on a computer, the computer is enabled to perform the method provided in embodiments of this application.

In embodiments of this application, "at least one" means one or more, and "a plurality of" means two or more. The term "and/or" describes an association relationship between associated objects and represents that three relationships may exist. For example, A and/or B may represent that only A exists, both A and B exist, or only B exists. A and B may be singular or plural. The character "/" in this specification generally indicates an "or" relationship between the associated objects. The expression "at least one of the following items" or a similar expression refers to any combination of these items, including a single item or any combination of a plurality of items. For example, at least one of a, b, and c may represent a, b, c, a-b, a-c, b-c, or a-b-c, where a, b, and c may be singular or plural.

A person of ordinary skill in the art may be aware that, units and algorithm steps described in embodiments disclosed in this specification can be implemented by electronic hardware or a combination of computer software and electronic hardware. Whether the functions are executed by hardware or software depends on particular applications and design constraints of the technical solutions. A person skilled in the art may use different methods to implement the described functions for each particular application, but it should not be considered that the implementation goes beyond the scope of this application.

A person skilled in the art may clearly understand that, for the purpose of convenient and brief description, for a detailed working process of the foregoing system, apparatus, and unit, refer to a corresponding process in the foregoing method embodiments. Details are not described herein again.

In the several embodiments provided in this application, when any function is implemented in a form of a software functional unit and sold or used as an independent product, the function may be stored in a computer-readable storage medium. Based on such an understanding, the technical solutions of this application essentially, or a part contributing to a conventional technology, or a part of the technical solutions may be implemented in a form of a software product. The computer software product is stored in a storage medium, and includes several instructions for instructing a computer device (which may be a personal computer, a server, or a network device) to perform all or a part of steps of the methods in embodiments of this application. The storage medium includes any medium that can store program code, such as a USB flash drive, a removable hard disk drive, and a read-only memory (Read-Only Memory, ROM for short below), a random access memory (Random Access Memory, RAM for short below), a magnetic disk, or an optical disc.

The foregoing descriptions are merely specific implementations of this application. Any variation or replacement readily figured out by a person skilled in the art within the technical scope disclosed in this application shall fall within the protection scope of this application. The protection scope of this application shall be subject to the protection scope of the claims.

## Claims

1. A device search method, applied to a first Bluetooth device, wherein the first Bluetooth device comprises: a first Bluetooth host, a second Bluetooth host, a first Bluetooth controller, and a second Bluetooth controller, the first Bluetooth host is connected to the first Bluetooth controller, and the second Bluetooth host is connected to the second Bluetooth controller; and the method comprises:
determining, by the first Bluetooth host, a first quantity of filters required by a Bluetooth application for searching for a Bluetooth device;
allocating, by the first Bluetooth host, the first quantity of filters to the Bluetooth application in idle filters of the first Bluetooth controller and the second Bluetooth controller, wherein when the first quantity of filters comprise an idle filter of the second Bluetooth controller, the first Bluetooth host indicates the second Bluetooth host to allocate the idle filter of the second Bluetooth controller to the Bluetooth application; and
searching, by the first Bluetooth host, for the Bluetooth device by using the first quantity of filters.

2. The method according to claim 1, wherein the allocating, by the first Bluetooth host, the first quantity of filters to the Bluetooth application in idle filters of the first Bluetooth controller and the second Bluetooth controller comprises:
when a quantity of idle filters of the first Bluetooth controller is a second quantity, a quantity of idle filters of the second Bluetooth controller is a third quantity, the second quantity is less than the first quantity, and the third quantity is greater than or equal to a difference between the first quantity and the second quantity, allocating, by the first Bluetooth host, the second quantity of filters to the Bluetooth application in the idle filters of the first Bluetooth controller, and controlling the second Bluetooth host to allocate the difference quantity of filters to the Bluetooth application in the idle filters of the second Bluetooth controller.

3. The method according to claim 2, wherein the searching, by the first Bluetooth host, for the Bluetooth device by using the first quantity of filters comprises:
controlling, by the first Bluetooth host, the first Bluetooth controller to search for the Bluetooth device by using the second quantity of filters, and indicating the second Bluetooth host to search for the Bluetooth device by using the difference quantity of filters, so that the second Bluetooth host controls the second Bluetooth controller to search for the Bluetooth device by using the difference quantity of filters.

4. The method according to claim 1, wherein the allocating, by the first Bluetooth host, the first quantity of filters to the Bluetooth application in idle filters of the first Bluetooth controller and the second Bluetooth controller comprises:
when a quantity of idle filters of the first Bluetooth controller is 0, a quantity of idle filters of the second Bluetooth controller is a third quantity, and the third quantity is greater than or equal to the first quantity, controlling, by the first Bluetooth host, the second Bluetooth host to allocate the first quantity of filters to the Bluetooth application in the idle filters of the second Bluetooth controller.

5. The method according to claim 4, wherein the searching, by the first Bluetooth host, for the Bluetooth device by using the first quantity of filters comprises:
indicating, by the first Bluetooth host, the second Bluetooth host to search for the Bluetooth device by using the first quantity of filters; and
controlling, by the second Bluetooth host, the second Bluetooth controller to search for the Bluetooth device by using the first quantity of filters.

6. The method according to any one of claims 1 to 5, further comprising:
when a total quantity of idle filters of the first Bluetooth controller and the second Bluetooth controller is less than the first quantity, indicating, by the first Bluetooth host, a filter allocation failure to the Bluetooth application.

7. The method according to claim 1, further comprising:
sending, by the first Bluetooth host, a search result of the Bluetooth device to the Bluetooth application;
displaying, by the Bluetooth application, a second interface, wherein the second interface is configured to display the search result; and
when the Bluetooth application detects, in the second interface, a selection operation performed by the user on a second Bluetooth device, establishing, by the first Bluetooth host, a Bluetooth connection to the second Bluetooth device by using the first Bluetooth controller.

8. The method according to claim 7, further comprising:
sending, by the first Bluetooth host, address information of the first Bluetooth controller and address information of the second Bluetooth controller to the second Bluetooth device.

9. The method according to claim 8, the sending, by the first Bluetooth host, address information of the first Bluetooth controller and address information of the second Bluetooth controller to the second Bluetooth device comprises:
sending, by the first Bluetooth host, the address information of the first Bluetooth controller and the address information of the second Bluetooth controller to the second Bluetooth device through the Bluetooth connection; or
sending, by the first Bluetooth host, the address information of the first Bluetooth controller to the second Bluetooth device through the Bluetooth connection, and uploading the address information of the second Bluetooth controller to a cloud server, so that the second Bluetooth device downloads the address information of the second Bluetooth controller from the cloud server.

10. The method according to claim 7, further comprising:
receiving, by the first Bluetooth host, address information of the second Bluetooth device sent by the second Bluetooth device, and sending the address information of the second Bluetooth device to the second Bluetooth host; and
adding, by the second Bluetooth host, the address information of the second Bluetooth device to the second Bluetooth controller, so that the second Bluetooth controller communicates with the second Bluetooth device based on the address information of the second Bluetooth device.

11. The method according to any one of claims 8 to 10, wherein the address information comprises an IRK.

12. A Bluetooth device, comprising:
a processor, a memory, a first Bluetooth controller, and a second Bluetooth controller, wherein one or more computer programs are stored in the memory, the one or more computer programs comprise instructions, and when the instructions are executed by the processor, the Bluetooth device is enabled to perform the method according to any one of claims 1 to 11.

13. A computer-readable storage medium, wherein the computer-readable storage medium stores a computer program, and when the computer program is run on a computer, the computer is enabled to perform the method according to any one of claims 1 to 11.
